# EUROPEAN PATENT SPECIFICATION

(11) **EP 2 378 645 B1**
(45) Date of publication and mention of the grant of the patent: **23.01.2019**
(21) Application number: 10769442.4
(22) Date of filing: 29.03.2010
(51) Int. Cl.: H02K 5/08, H02K 5/173, H02K 11/01, H02K 11/40

(54) **ELECTRIC MOTOR AND ELECTRIC EQUIPMENT WITH SAME**
ELEKTROMOTOR UND ELEKTRISCHE ANLAGE DAMIT
MOTEUR ÉLECTRIQUE ET ÉQUIPEMENT ÉLECTRIQUE L'UTILISANT

(30) Priority: 28.04.2009 JP 2009109193
(43) Date of publication of application: 19.10.2011
(73) Proprietor: Panasonic Intellectual Property Management Co., Ltd., Osaka-shi, Osaka 540-6207 (JP)
(72) Inventor: KADO, Haruhiko, Osaka 540-6207 (JP); MIZUKAMI, Hirofumi, Osaka 540-6207 (JP); WATANABE, Akihiko, Osaka 540-6207 (JP); HASEGAWA, Takehiko, Osaka 540-6207 (JP)
(74) Representative: SSM Sandmair
(86) International application number: PCT/JP2010/002250
(87) International publication number: WO 2010/125740

(56) References cited:
- JP-A- 10 322 965
- JP-A- 2002 327 751
- JP-A- 2002 327 751
- JP-A- 2008 289 272
- JP-T- 2008 526 175
- US-A- 5 485 331
- US-A1- 2001 017 495
- US-A1- 2003 086 630
- US-A1- 2006 186 746
- KLAASSEN K B ET AL: "Charge generation and bleed-off in spindle motors with ceramic ball bearings", IEEE TRANSACTIONS ON MAGNETICS, IEEE SERVICE CENTER, NEW YORK, NY, US, vol. 39, no. 5, 1 September 2003 (2003-09-01), pages 2435-2437, XP011101503, ISSN: 0018-9464, DOI: 10.1109/TMAG.2003.816429

## Description

### Technical Field

The present invention relates to an electric motor and electric equipment including the same motor. More particularly, it relates to an electric motor which is improved in deterioration caused by an electric erosion on the bearing, and the electric equipment including the same motor.

### Background Art

In recent years, motors driven by the inverter of PWM (Pulse Width Modulation) method have prevailed in the market. In the case of the motors driven by the PWM inverters, an electric potential at the neutral point of the winding cannot be 0 (zero), so that an electric potential difference (hereinafter referred to as an axial voltage) is generated between the outer ring and the inner ring of the bearing. The axial voltage contains a high-frequency signal produced by a switching operation. When the axial voltage reaches a dielectric breakdown voltage of the oil film inside the bearing, a micro electric current (hereinafter referred to as an axial current) runs in the bearing, thereby inviting an electric erosion in the bearing. An aggravation of the electric erosion will result in wavy abrasion on the inner ring, the outer ring, or the balls of the bearing, and the wavy abrasion sometimes incurs an abnormal sound. The electric erosion is thus one of chief factors causing defects of the motor.

The following measures have been taken for preventing the electric erosion:
(1) The inner ring and the outer ring of the bearing are made conductive with each other.
(2) The axial voltage is lowered.
(3) The inner ring is insulated from the outer ring of the bearing.

Method (1) employs, e.g. a conductive lubricant for the bearing. However, the conductive lubricant lowers the conductivity with the lapse of time, and is short of reliability in slide action. A brush can be mounted on a rotary shaft for making the inner ring and the outer ring conductive; however, this method incurs abrasion dust of the brush and requires a space for the brush.

Method (2), e.g. electrically shorts a stator iron-core to a conductive metallic bracket, thereby varying an electrostatic capacity for lowering the axial voltage. This method is a public domain and disclosed in, e.g. Unexamined Japanese Patent Application Publication No. 2007-159302.

Unexamined Japanese Patent Application Publication No. 2007-159302 discloses that the stator iron-core is electrically shorted to the bracket for lowering impedance on the stator side, thereby suppressing the electric erosion on the bearing.

To be more specific, the motors used in devices operated in a wet area, e.g. washing machine and dish washer, have a risk of inviting an electric shock, so that not only an insulation on a charging section (primary insulation) but also an independent insulation (hereinafter referred to as an additional insulation) is needed. On the other hand, the other motors, used in e.g. an indoor unit or an outdoor unit of the air-conditioner, a water heater, or an air-cleaner, have no risk of the electric shock, so that the additional insulation is not needed. The motors to be used in the indoor unit or outdoor unit of the air-conditioner, the water heater, or the air-cleaner thus employ the rotors not insulated, so that the impedance on the rotor side (inner ring side of the bearing) stays low, while the impedance on the stator side (outer ring side of the bearing) stays high. In this case, the electric potential on the inner ring side is high while that on the outer ring side is low, so that they fall into an unbalanced state of the impedance, and a high axial voltage is generated. This high axial voltage may invite an electric erosion on the bearing.

In order to avoid the foregoing problem, Unexamined Japanese Patent Application Publication No. 2007-159302 discloses a method of lowering the impedance on the stator side (outer ring side) by electrically shorting the stator iron-core to the bracket. This electric short eliminates electrostatic capacity between the stator iron-core and the bracket, so that the impedance on the stator side can be reduced, and then make the impedance approximate the impedance on the rotor side (inner ring side), whereby a difference in electric potential between the inner ring and the outer ring of the bearing, i.e. the axial voltage, can be lowered.

However, the method disclosed by Unexamined Japanese Patent Application Publication No. 2007-159302 lowers the impedance, so that a voltage drop becomes smaller, and a voltage on the outer ring side increases as well as the voltage of the inner ring side increases. If the balance is lost in the impedance due to the operating environment of the motor or the dispersion in accuracy of assembling the stator and the rotor together, the axial voltage tends to rise contrary to expectation. This situation may tend to invite the electric erosion.

Method (3) employs, e.g. all the iron-balls in the bearing are replaced with non-conductive balls made of ceramic, i.e. electrically insulating material. This method is disclosed in Unexamined Japanese Patent Application Publication No. 2007-16846. However, this method is expensive although a high anti-erosion effect can be expected.

In recent years, as Unexamined Japanese Patent Application Publication No. 2007-159302 discloses, a stator member including the stator iron-core is integrally molded by mold member for increasing the reliability. This motor is proposed as a molded motor. On top of that, a resin housing, which is a part of the mold member, is used for fixing the bearing, so that the molded motor can be formed with a simple structure. On the other hand, use of a metal bracket for fixing the bearing is better than the use of mold member in view of the strength of fixing the bearing. Bearings thus have been fixed with the metal bracket or the mold member selectively in response to fixing strength required to the motor. To be more specific, the molded motor with the following structure is proposed: the bearing can be fixed on a counter output shaft side with a part of the mold member used in integral molding because not so severe fixing strength of the bearing is required on the counter output shaft side, and the bearing can be fixed with the metal bracket on an output shaft side where severe fixing strength is required.

The motor normally uses two bearings for support the shaft; however, in the case, as discussed above, where a first bearing is fixed with a metal bracket and a second bearing is fixed with a resin housing, the motor encounters the following problem in view of electric erosion: The resin housing has firm insulating performance while the metal bracket has conductivity. An axial current resists flowing between an inner ring and an outer ring of the bearing fixed with the resin housing while the axial current flows with ease therebetween of the bearing fixed with the metal bearing because the insulating performance is lowered on the conductive bracket side. As a result, the electric erosion tends to occur on the bearing fixed with the bracket. As discussed above, when the two bearings are made of different material from each other, the electric erosions tend to occur only on the first bearing. On top of that, even if the two bearings are fixed with the metal brackets, the insulating performance loses balance depending on the sizes and places of the brackets, whereby the electric erosion tends to occur only on one bearing. In such a case, the service life of the motor is obliged to be restricted by this one bearing.

US-2003/086630 A1 relates to a method and system for reducing bearing fluting in an electromechanical machine. A non-conductive insulating ring is inserted between a motor bell and a motor bearing that supports a motor shaft. Stray currents that normally discharge thorough the motor shaft and the motor bearing to the motor bell are prevented due to the non-conductive nature of the insulating ring. Additionally, the motor shaft is grounded to provide a low-impedance alternative path to stray shaft currents. When a fast-switching frequency converter is used to drive the motor shaft, additional arrangements such as a common mode choke, reduction of the switching frequency of the converter, and reduction of the turn-ofoff rate of a semiconductor device used in the converter, may be provided to further reduce the stray currents flowing thorough the motor bearings.

US-5,485,331 relates to high resistivity bearing balls for spindle motor isolation. A disc drive for storing and retrieving data from at least one memory storage disc includes a drive base and a spindle motor. The spindle motor includes a rotor hub, a shaft, a bearing sleeve, and a bearing unit. The bearing unit is operably coupled to the rotor hub and includes an inner race secured to the shaft, an outer race secured to the bearing sleeve, and bearing balls fitted between the inner race and the outer race. The bearing balls rotatably support the rotor hub about an axis. At least one structural element of the spindle motor has a high resistivity so as to electrically isolate the hub from the base. In another embodiment, the drive base has an interface surface for coupling with the spindle motor. The interface surface includes a layer of high resistivity material. In another embodiment, the bearing ball is made of ceramic or ruby material to improve performance characteristics. In yet another embodiment, an insert is inserted between the bearing sleeve and the shaft to improve performance characteristics.

JP 2002-327751 A1 relates to a rolling bearing cabable of controlling destruction of devices caused by an electrical charge of static electricity by means of a rolling body having the designated value of electric resistance and the designated coefficient of thermal expansion and also controlling a rotating runout caused by the difference of thermal expansion during high speed rotation, and also to a spindle motor using the bearing.

In the rolling bearing in which all of rolling bodies are made of ceramics, the rolling bodies are composed of one or more of silicon nitride rolling bodies and zirconia rolling bodies. The value of electric resistance of at least one kind of the rolling bodies is 10² to 10⁷ Ω.cm. The number of the silicon nitride rolling bodies is 50% or more of all the rolling bodies, and the diameter of the silicon nitride rolling bodies is 0.03 to 0.3 µm larger than the diameter of the zirconia rolling bodies.

US-2006/186746 A1 relates to a motor and electric apparatus equipped with the same. The motor comprises a stator having a stator core and a stator winding wound on the stator core and integrally molded with insulation resin, a rotor provided with a shaft, a first bearing and a second bearing for supporting the shaft, a bracket connected to the stator and retaining at least one of the first bearing and the second bearing, and a conductive member short-circuiting between the stator core and the bracket.

Publication KLASSEN K B et al: "Charge generation and bleed-off in spindle motors with ceramic ball bearings", IEEE TRANSACTIONS ON MAGNETICS, IEEE CENTER, NEW YORK, NY, US, vol. 39, no. 5, 1 September 2003 (2003-09-01), pages 2435-2437, XP011101503, ISSN: 0018-9464, DOI: 10.1109/TMAG.2003.816429 describes that spindle motors with hybrid ceramic bearings are well suited for high revolution per minute disk drives due to their high rigidity and low acoustic emission. The rolling elements are non-conductive Si3N4 precision ground balls.

US-2001/017495A1 relates to a motor having shaft-grounding arrangement. A DC motor has a conductive case and an arrangement for electrically connecting the shaft and case of the DC motor that is grounded. The arrangement includes a conductive member and a pressing member that presses the conductive member against the shaft, thereby grounding the shaft.

JP-10322965 A relates to a motor having reduced galvanic corrosion which occurs in bearings by providing roller bearings filled with a low-viscosity grease. In this respect, a motor is provided on its load side with a roller bearing filled with a grease which is lower in viscosity than that in a bearing on the anti-load side. Although in this case the roller bearing filled with the lower-viscosity grease is placed on the load side, no problem is posed if the roller bearing is placed on the anti-load side. If three or more bearings are used, the bearings may be arranged in any way, as long as one of the bearings is a roller bearing filled with a viscosity grease lower than those filled in the other bearings. Low-voltage discharge is repeated on the load-side bearing by employing the roller bearing, because the discharge energy per unit area is low and because the oil-film breakdown voltage is reduced. The discharge energy itself can be lowered because of low voltage. Therefore, galvanic corrosion can be reduced.

### SUMMARY OF THE INVENTION

The invention is defined by the subject-matter of independent claim 1. The dependent claims are directed to advantageous embodiments.

### ADVANTAGES OF THE INVENTION

The motor of the present invention and an electric equipment having the same motor allow the service lives of the two bearings to approach to each other, whereby the service life of the motor can be prolonged.

### Brief Description of Drawings

Fig. 1 is a sectional view of a structure of a motor in accordance with a first embodiment of the present invention.
Fig. 2 is a sectional view of another structure of a motor in accordance with the first embodiment of the present invention.
Fig. 3 schematically shows a structure of an indoor unit of an air-conditioner, as an instance of electric equipment in accordance with a comparative example which is not part of the present invention.

### Preferred Embodiments for Carrying Out Invention

Exemplary embodiments of the present invention are demonstrated hereinafter with reference to the accompanying drawings.

### Exemplary Embodiment 1

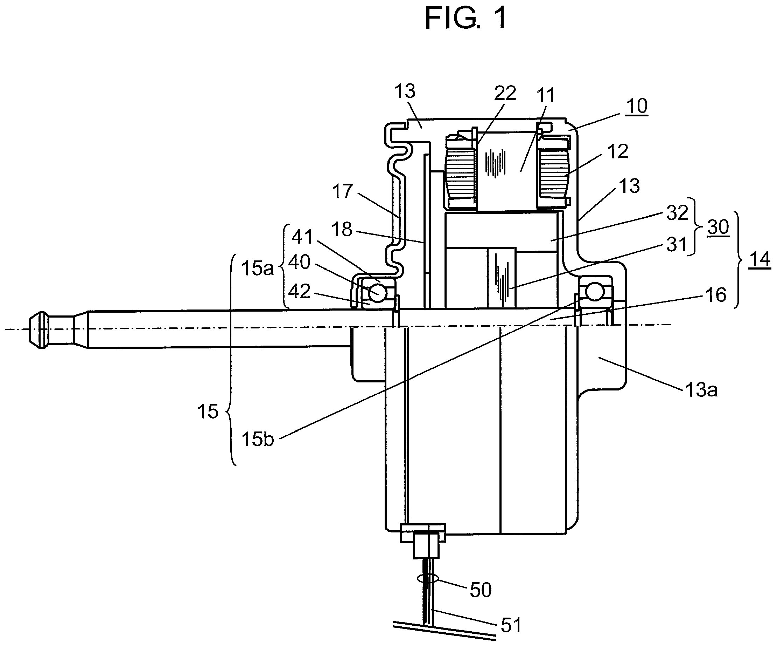

Fig. 1 is a sectional view of a structure of a motor in accordance with the first embodiment of the present invention. In this first embodiment, a motor is mounted to an air-conditioner as an example of electric equipment, and the motor employs a brushless motor that drives a blower fan of an indoor unit. The motor is an inner-rotor type in which the rotor is placed rotatably inside the stator.

In Fig. 1 , insulator 22 made of resin insulates stator iron-core 11, and then winding 12 is wound on iron-core 11. This iron-core 11 is molded integrally together with other stator members by insulating resin 13 working as molding material. This integral molding allows an appearance of stator 10 to form roughly a cylindrical shape.

Rotor 14 is inserted inside stator 10 with a space between them. Rotor 14 includes rotary body 30 shaped like a disc and having rotor iron-core 31, and rotary body 30 joins to shaft 16 such that shaft 16 extends through rotary body 30 at the center. Rotary iron-core 31 holds multiple permanent magnets confronting the inner wall of stator 10 along the circumferential direction. Fig. 1 shows an example of rotor iron-core 31 integrally molded together with ferrite resin magnet 32 working as the permanent magnet. The inner wall of stator 10 thus confronts the outer wall of rotary body 30.

Shaft 16 of rotor 14 is mounted with two bearings which support shaft 16. Each one of bearings 15 includes multiple balls between an outer ring and an inner ring and forms a cylindrical shape, and is fixed to shaft 16 on the inner ring side. As shown in Fig. 1 , shaft 16 is supported by bearing 15a on an output shaft side, namely, a protruding side of shaft 16 from the brushless motor body, and on the other side, i.e. the counter output shaft side, shaft 16 is supported by bearing 15b. Bearing 15a on the output shaft side is fixed with metal bracket 17 at the outer ring side, and bearing 15b on the counter output shaft side is fixed with insulating resin 13 used in integral mold at the outer ring side. The foregoing structure allows two bearings 15 to support shaft 16, so that rotor 14 can rotate.

The brushless motor includes drive circuit board 18, on which a drive circuit having a control circuit, is mounted. Board 18 is built into the brushless motor, and then bracket 17 is press-fitted into stator 10, thereby completing the brushless motor.

Drive circuit board 18 is connected with connection wires 50 including e.g. lead-wires for applying a power supply voltage of the windings, a power supply voltage of the control circuit, and a control voltage for controlling the rpm, and also grounding wire 51, which is connected to ground GND on board 18. The ground is a reference point of zero electric potential on board 18. This reference point is used for setting a reference electric potential at 0 (zero) volt, so that a wiring pattern as the ground wiring is prepared on board 18. To be more specific, grounding wire 51 included connection wires 50 is connected to the ground wiring on board 18.

The ground on drive circuit board 18, which is mounted with the drive circuit, is insulated from the earth ground and a primary side (power supply) circuit, and is in a floating state from the electric potential of the earth ground and that of the primary side power supply circuit. The power supply circuit for supplying a power supply voltage to the winding, the power supply circuit for supplying a power supply voltage to the control circuit, the lead wire for applying the control voltage, and grounding wire 51, all of which are connected to board 18, are electrically insulated from the earth ground that is connected to the primary side circuit. In other words, the foregoing power supply circuits and others are electrically insulated from the following items: the primary side (power supply) circuit relative to the power supply circuit for supplying the power supply voltage to the wiring, the primary side (power supply) circuit relative to the power supply circuit for supplying the power supply voltage to the control circuit, the earth ground connected to these primary side (power supply) circuits, and an independent earth ground. To be more specific, the drive circuit mounted to board 18 is electrically insulated from the electric potential of the primary side circuits and that of the earth ground, so that the electric potential of the drive circuit is in a floating state. This is also referred to as the electric potential is floated, and this expression is well known. The structure of the power supply circuit for the windings connected to board 18 and that for the control circuit is called as a floating power supply, and this expression is also well known.

The brushless motor in accordance with this first embodiment employs balls 40 made of ceramic material, i.e. electrically insulating material, in first bearing 15a out of two bearings in order to electrically insulate outer ring 41 from inner ring 42 of bearing 15a. On the other hand, second bearing 15b employs regular iron balls, the inner ring and outer ring both made of iron. The brushless motor thus includes first bearing 15a, of which outer ring 41 is electrically insulated from inner ring 42, is fixed to metal bracket 17, and second bearing 15b is fixed to insulating resin 13.

The respective power supply voltages and control signals are supplied through connection wires 50 to the brushless motor discussed above, and stator windings 12 are driven by the drive circuit mounted on drive circuit board 18. The drive of stator windings 12 prompts a drive current to flow through windings 12, and then iron-core 11 produces a magnetic field. The magnetic field from iron core 11 and the magnetic field from permanent magnets 32 produce attractive force and repulsive force in response to the polarities of the magnetic fields, and those forces rotate rotor 14 on shaft 16.

The foregoing brushless motor detailed about structure hereinafter. Shaft 16 of the motor is supported by two bearings 15, and first bearing 15a is fixed with metal bracket 17, and second bearing 15b is fixed with insulating resin 13.

To be more specific, bearing 15b on the counter output shaft side is fixed by a hollow cylindrical section of insulating resin 13, the cylindrical section has a diameter almost equal to the outer diameter of bearing 15b. As shown in Fig. 1 , insulating resin 13 on the counter output shaft side thus forms motor projection part 13a that projects from the motor body in the counter output shaft direction. Inside of motor projection part 13a forms a hollow cylindrical shape, of which diameter is almost equal to the outer diameter of bearing 15b, which is then inserted in this hollow cylindrical shape, whereby bearing 15b is fixed to insulating resin 13. Bearing 15b is thus placed inside motor projection part 13a.

Next, bearing 15a on the output shaft side is fixed by bracket 17 of which outer diameter is almost equal to that of stator 10. Bracket 17 is shaped like a disc, and has a projection section at the center of the disc. The projection section is hollow inside and has an outer diameter almost equal to that of bearing 15a. After drive circuit board 18 is built in the motor, the projection section is press-fitted into bearing 15a at the inside of the projection section of bracket 17, and bracket 17 is press-fitted into stator 10 such that a connection terminal provided to the outer wall of bracket 17 can be fit to the connection terminal of stator 10. The brushless motor is thus formed. This structure will ease the assembling work, and bearing 15a can be firmly fixed.

The foregoing description details the structure of the brushless motor. Next, this brushless motor is analyzed from the electrical view of point. A signal producing an axial voltage can be generated chiefly from stator iron-core 11 on which stator winding 12 is wound, and winding 12 is driven by high-frequency switching of the PWM method. As discussed previously, the impedance on the rotor side (inner ring side) is low while the impedance on the stator side (outer ring side) is high. In other words, stator iron-core 11 confronts rotary body 30 with a narrow clearance between them. On top of that, rotary body 30 and shaft 16 are made of conductive material, so that the impedance between iron-core 11 and the inner ring of bearing 15 is low. The high-frequency signal generated from stator iron-core 11 thus can travel to the inner ring free from attenuation because of this low impedance. As a result, a high-frequency voltage with a high electric potential is produced on the inner ring of bearing 15.

Let us think about the impedance on the stator side. Motor projection part 13a of insulating resin 13 is connected to the outer ring of bearing 15b, and this projection part 13a is placed at some distance from stator iron-core 11 without any conductive material between them. The impedance between stator iron-core 11 and the outer ring of bearing 15 is thus high. Since metal bracket 17 connected to outer ring 41 of bearing 15a is conductive, the impedance on bearing 15a side is lower than that on bearing 15b side. The impedance between bearing 15a and bearing 15b is higher than the impedance on the rotary side. The high-frequency electric current generated from stator iron-core 11 is thus attenuated by this high impedance and travels to the outer ring of bearing 15. As a result, a high-frequency voltage of a lower electric potential than that on the rotor side is produced on the outer ring.

To be more specific, a comparison of impedance between the stator side and the rotor side shows that the balance is lost between them, so that a difference in electric potential, i.e. an axial voltage, is produced between the inner ring and the outer ring of bearing 15, and an axial current flow in bearing 15. The flow of axial current accelerates abrasion between the inner ring and the outer ring, so that deterioration due to abrasion, i.e. an electric erosion, is aggravated.

When bearing 15a fixed with metal bracket 17 is compared with bearing 15b fixed with insulating resin 13, a greater amount of axial current flows in bearing 15a than in bearing 15b because bearing 15a has lower impedance than bearing 15b (in this case, assume that both bearings 15a and 15b employ iron balls.)

The difference in structure on the outer ring sides, as discussed above, invites losing the balance in the impedance between bearing 15a on the output shaft side and bearing 15b on the counter output shaft side, so that different amounts of axial currents flow in two bearings 15 respectively. The axial current resists flowing between the inner ring and the outer ring of bearing 15b fixed with insulating resin 13, while the axial current flows with ease in bearing 15a fixed with conductive bracket 17.

The brushless motor in accordance with this first embodiment thus employs ceramic balls 40 in bearing 15a, namely, the bearing in which a greater amount of axial current flows than in bearing 15b, whereby the electric insulation between outer ring 41 and inner ring 42 of bearing 15a can be reinforced. This structure allows preventing the electric erosion caused by the axial current from worsening. On the other hand, since the axial current resists flowing between the inner ring and the outer ring of bearing 15b, so that the electric erosion resists occurring even iron balls generally used are employed. Assume that the service life of the motor depends on the deterioration caused by electric erosion, the service life of bearing 15a approaches to that of bearing 15b. As a result, the service life of this brushless motor thus can be prolonged. On top of that, ceramic balls can be used in only one bearing out of two bearings, so that the cost can be less expensive than a case where ceramic balls are employed in both the bearings.

The motor of the present invention, as discussed above, comprises the following structural elements:
stator formed of a stator member, including a stator iron-core on which a winding is wound, integrally molded by insulating resin;
a rotor mounted on a shaft as a center and confronting the stator;
two bearings supporting the shaft rotatably;
brackets fixing the bearings; and
a drive circuit board mounted with a drive circuit which supplies an electric current to the winding for driving the rotor. Either one of the two bearings is electrically insulated between the outer ring and the inner ring. The foregoing structure allows the axial current to resist flowing to the one bearing made of, e.g. ceramic material and thrown into an insulated state, thereby preventing deterioration caused by the electric erosion from worsening. This structure allows the service life of the one bearing to approach to the service life of the other bearing employing iron balls generally used. As a result, the service life of the motor can be prolonged. The present invention thus can provide the motor in which deterioration caused by the electric erosion on the bearing can be suppressed.

In the foregoing discussion, the greater amount of axial current flows in bearing 15a on the output shaft side than in bearing 15b on the counter output shaft side, so that ceramic balls 40, as an example, are employed in bearing 15a. However, the impedance of bearing 15a on the output shaft side differs from that of bearing 15b on the counter output shaft side depending on the following structural conditions: a size and a shape of bracket 17 which fixed bearing 15a, a difference between a space from stator iron-core 11 to bearing 15a and a space from iron-core 11 to bearing 15b, and a state of insulating resin 13 between bearings 15a and 15b. In other words, to the contrary to what is discussed previously, there is a case where a smaller amount of the axial current flows the bearing fixed with metal bracket. In such a case, not to mention, the other bearing, which is not fixed with the metal bracket, employs ceramic balls.

The previous discussion refers to an instance where only bearing 15a out of two bearings 15 is fixed with metal bracket 17; however, each one of two bearings 15 can be fixed with the metal bracket.

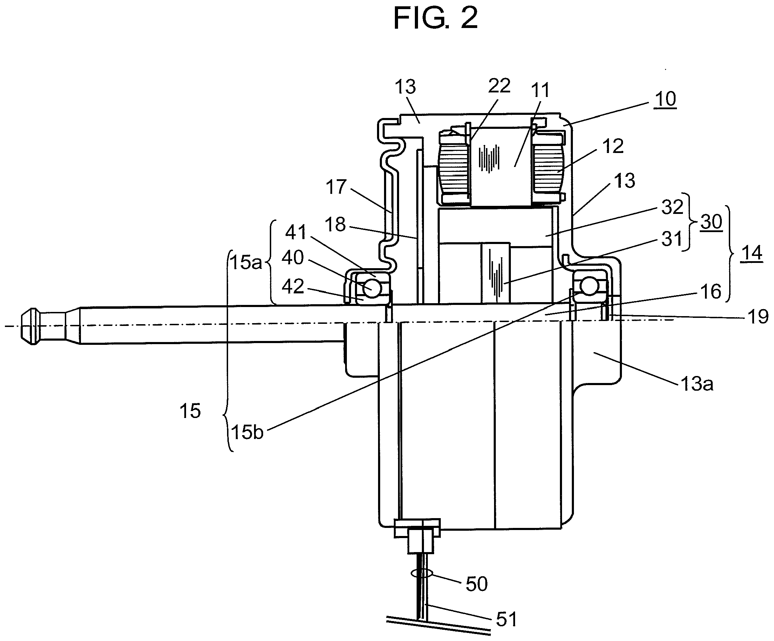

Fig. 2 is a sectional view illustrating another structure of the motor in accordance with the first embodiment, and it shows the instance of fixing each one of two bearings 15 with a metal bracket. To be more specific, as shown in Fig. 2 , bearing 15b on the counter output shaft side is fixed to insulating resin 13 via bracket 19 of which diameter is smaller than that of bracket 17. Even this structure, i.e. both of two bearings are fixed with metal brackets, encounters a difference in impedance between bearing 15a on the output shaft side and bearing 15b on the counter output shaft side because of the sizes of the two brackets and the structure of the motor, so that the axial currents differ from each other. In this structure, the balls of the bearing, in which a greater amount of axial current flows, can thus employ ceramic material.

The foregoing description refers to the instance where the balls of bearing 15 employ ceramic material. However, a structure, where one of the outer ring or the inner ring is made of electrically insulating material, e.g. ceramic, or all of the outer ring, inner ring and balls are made of the insulating material, can produce an advantage similar to what is discussed previously.

In the previous discussion, the inner rotor type motor is used, in which the rotor is rotatably placed inside the stator; however, the structure of insulating the inner ring from the outer ring of a bearing, in which a greater amount of axial current flows than the other bearing, also produces an advantage similar to what is discussed above in the following two types of motor: an outer rotor type motor in which the rotor is placed outside the stator, and a twin rotor type motor in which the rotors are placed both inside and outside the stator.

### COMPARATIVE EXAMPLE

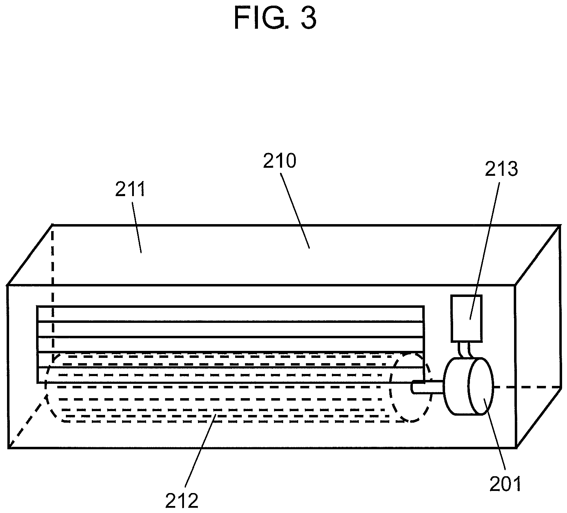

The comparative example refers to a structure of an indoor unit of an air-conditioner as an example of electric equipment which is not part of the present invention. Fig. 3 schematically illustrates a structure of the indoor unit of an air-conditioner as an example of electric equipment in accordance with the comparative example which is not part of the present invention.

As shown in Fig. 3 , indoor unit 210 is formed of housing 211 and brushless motor 201 placed in housing 211. Cross-flow fan 212 is mounted on a rotary shaft of motor 201. Motor 201 is driven by motor driver 213, which is powered to rotate motor 201, and then cross-flow fan 212 starts rotating. The rotation of cross-flow fan 212 blows the air into a room, where the air is conditioned by a heat exchanger (not shown) working for the indoor unit. Brushless motor 201 employs, e.g. the motor in accordance with the first exemplary embodiment of the present invention.

The electric equipment thus comprises a brushless motor and a housing in which the motor is mounted. The motor, having the structure previously discussed, is employed as this brushless motor of the electric equipment.

The foregoing comparative example describes the brushless motor used in an indoor unit of the air-conditioner. The comparative example can be applied to other brushless motors to be used in home appliances, information devices, and industrial devices.

### Industrial Applicability

The present invention allows suppressing deterioration, caused by an electric erosion, of the motor. The motor can be used effectively in electric equipment, of which motors are required to be less expensive and have a longer service life.

### Description of Reference Sings

- 10: stator
- 11: stator iron-core
- 12: stator winding
- 13: insulating resin
- 13a: motor projection part
- 14: rotor
- 15, 15a, 15b: bearing
- 16: shaft
- 17, 19: bracket
- 18: drive circuit board
- 22: insulator
- 30: rotary body
- 31: rotor iron-core
- 32: ferrite resin magnet
- 40: ball
- 41: outer ring
- 42: inner ring
- 50: connection wire
- 51: grounding wire
- 201: brushless motor
- 210: indoor unit of air-conditioner
- 211: housing
- 212: cross-flow fan
- 213: motor driver

## Claims

1. A brushless motor driven by an inverter, comprising:
a stator (10) integrally molded together with a stator member including a stator iron-core (11) having a winding (12) wound thereon by insulating resin (13);
a rotor (14) mounted around a shaft (16) in a manner to confront the stator (10);
two bearings (15; 15a, 15b) supporting the shaft (16) rotatably, on an output shaft side and a counter output shaft side;
a metal bracket (17) fixing one bearing (15a) of the two bearings (15; 15a, 15b) on one side; the other bearing (15b) being fixed to the insulating resin (13), and
a drive circuit board (18) including a drive circuit which has PWM inverters and supplies an electric current from the PWM inverters to the winding (12) so as to drive the rotor (14),
wherein each of the two bearings (15a, 15b) includes an outer ring (41), an inner ring (42), and a plurality of balls (40) disposed between the outer ring (41) and the inner ring (42);
**characterized in that**:
only one of the two bearings (15; 15a, 15b) uses electrically insulating material for at least one of the outer ring (41), the inner ring (42), and the balls (40),
wherein the one of the two bearings is the bearing in which a greater amount of axial current flows between the inner ring and the outer ring of the bearing, when both bearings employ iron balls.

2. The brushless motor of claim 1, wherein the electrically insulating material is ceramic material.

3. The brushless motor of claim 1 or 2,
wherein the other bearing (15b) is fixed to the insulating resin (13) via a metal bracket (19); and
wherein the metal bracket (19) differs in size from the metal bracket (17).

4. An electric equipment including the brushless motor according to any one of claims 1 to 3.

## Patentansprüche

1. Bürstenloser Motor, der durch einen Wechselrichter angetrieben wird und der Folgendes umfasst:
einen Stator (10), der einteilig zusammen mit einem Statorelement, das einen Statoreisenkern (11), auf den eine Wicklung (12) gewickelt ist, enthält, durch Isolationsharz (13) geformt ist;
einen Rotor (14), der in der Weise, dass er sich gegenüber dem Stator (10) befindet, an einer Welle (16) montiert ist;
zwei Lager (15; 15a, 15b), die die Welle (16) drehbar tragen, an einer Ausgangswellenseite und einer Gegenausgangswellenseite;
eine Metallklammer (17), die ein Lager (15a) der zwei Lager (15; 15a, 15b) auf einer Seite befestigt; wobei das andere Lager (15b) am Isolationsharz (13) befestigt ist, und
eine Ansteuerleiterplatte (18), die eine Ansteuerschaltung, die PWM-Wechselrichter besitzt und einen elektrischen Strom von den PWM-Wechselrichtern zur Wicklung (12) liefert, enthält, um den Rotor (14) anzusteuern, wobei
jedes der zwei Lager (15a, 15b) einen Außenring (41), einen Innenring (42) und mehrere Kugeln (40), die zwischen dem Außenring (41) und dem Innenring (42) angeordnet ist, enthält;
**dadurch gekennzeichnet, dass**
lediglich eines der zwei Lager (15; 15a, 15b) ein elektrisch isolierendes Material für den Außenring (41), den Innenring (42) und/oder die Kugeln (40) verwendet, wobei
das eine der zwei Lager das Lager ist, in dem eine größere Menge des Axialstroms zwischen dem Innenring und dem Außenring des Lagers fließt, wenn beide Lager Eisenkugeln einsetzen.

2. Bürstenloser Motor nach Anspruch 1, wobei das elektrisch isolierende Material ein Keramikmaterial ist.

3. Bürstenloser Motor nach Anspruch 1 oder 2, wobei
das andere Lager (15b) mittels einer Metallklammer (19) am Isolationsharz (13) befestigt ist und
die Metallklammer (19) sich in ihrer Größe von der Metallklammer (17) unterscheidet.

4. Elektrisches Gerät, das den bürstenlosen Motor nach einem der Ansprüche 1 bis 3 enthält.

## Revendications

1. Moteur sans balai entraîné par un inverseur, comprenant :
un stator (10) moulé ensemble d'un seul tenant avec un élément de stator comprenant un noyau ferreux de stator (11) présentant un enroulement (12) enroulé sur celui-ci par une résine d'isolation (13) ;
un rotor (14) monté autour d'un arbre (16) de manière à faire face au stator (10) ;
deux paliers (15 ; 15a, 15b) supportant l'arbre (16) de manière rotative, sur un côté arbre de sortie et un côté opposé à l'arbre de sortie ;
un étrier métallique (17) permettant de fixer un palier (15a) des deux paliers (15 ; 15 a, 15b) sur un côté ; l'autre palier (15b) étant fixé à la résine d'isolation (13), et
une carte de circuit de commande (18) comprenant un circuit de commande qui comporte des inverseurs MID et fournit un courant électrique provenant des inverseurs MID à l'enroulement (12) de manière à entraîner le rotor (14),
chacun des deux paliers (15a, 15b) comprenant un anneau extérieur (41), un anneau intérieur (42) et une pluralité de billes (40) disposées entre l'anneau externe (41) et l'anneau interne (42) ;
**caractérisé en ce que** :
seulement un des deux paliers (15 ; 15a, 15b) utilise un matériau électriquement isolant pour l'anneau externe (41), l'anneau interne (42) et/ou les billes (40),
l'un des deux paliers étant le palier dans lequel une plus grande quantité de courant axial s'écoule entre l'anneau interne et l'anneau externe du palier, lorsque les deux paliers utilisent des billes en fer.

2. Moteur sans balai selon la revendication 1, dans lequel le matériau électriquement isolant est un matériau en céramique.

3. Moteur sans balai selon la revendication 1 ou 2,
dans lequel l'autre palier (15b) est fixé à la résine isolante (13) par le biais d'un étrier métallique (19) ; et
dans lequel l'étrier métallique (19) diffère en dimension de l'étrier métallique (17).

4. Équipement électrique comprenant le moteur sans balai selon l'une quelconque des revendications 1 à 3.
